# EUROPÄISCHE PATENTSCHRIFT

(11) **EP 4 037 921 B1**
(45) Veröffentlichungstag und Bekanntmachung des Hinweises auf die Patenterteilung: **29.01.2025**
(21) Anmeldenummer: 20771217.5
(22) Anmeldetag: 01.09.2020
(51) Int. Cl.: B60C 23/04

(54) **VERFAHREN ZUR SPEICHERUNG VON REIFENDRUCK- UND REIFENTEMPERATURWERTEN VON FAHRZEUGREIFEN**
METHOD FOR STORING TYRE PRESSURE VALUES AND TYRE TEMPERATURE VALUES OF VEHICLE TYRES
PROCÉDÉ DE STOCKAGE DE VALEURS DE PRESSION DE PNEU ET DE VALEURS DE TEMPÉRATURE DE PNEU POUR PNEUS DE VÉHICULE

(30) Priorität: 01.10.2019 DE 102019215109
(43) Veröffentlichungstag der Anmeldung: 10.08.2022
(73) Patentinhaber: Continental Reifen Deutschland GmbH, 30175 Hannover (DE)
(72) Erfinder: LEHMANN, Joerg, 30165 Hannover (DE); MENZ, Rüdiger, 30165 Hannover (DE); SAHLMÜLLER, Baldo, 30165 Hannover (DE)
(74) Vertreter: Continental Corporation
(86) Internationale Anmeldenummer: PCT/EP2020/074280
(87) Internationale Veröffentlichungsnummer: WO 2021/063614

(56) Entgegenhaltungen:
- DE-A1- 10 144 326
- US-A1- 2010 132 445

## Beschreibung

Die Erfindung betrifft ein Verfahren zur Speicherung von Reifendruck- und Reifentemperaturwerten von Fahrzeugreifen.

Zur Überwachung von Reifenzuständen, insbesondere einem Reifendruck oder einer Reifentemperatur, von Reifen eines Nutzfahrzeuges sind Reifen-Sensor-Module bzw. Reifenmodule bekannt, die beispielsweise im Inneren eines Reifens angeordnet sind. Derartige Reifen-Sensor-Module sind ausgebildet, positionsgebunden einen Reifendruck zu erfassen, zu verarbeiten und an ein elektronisches Steuergerät (ECU) eines Überwachungssystems zu übertragen. Das Steuergerät nimmt das Datentelegramm über ein Empfangsmodul des Überwachungssystems auf und gibt in Abhängigkeit von Grenzwerten ein Warnsignal an den Fahrer aus, beispielsweise wenn an einem der Reifen ein Reifendruck unterhalb eines Grenzwertes festgestellt wurde. Ein Beispiel für ein solches Reifen-Sensor-Modul offenbart die DE 102 43 441 A1.

Es sind eine Vielzahl von Reifendruckkontrollsystemen bekannt, mit denen Druckverluste erkannt werden können.

Die DE 101 44 326 A1 und US2010/132445 A1 offenbaren bekannte Reifendruckkontroll-Systeme.

Der Erfindung liegt die Aufgabe zugrunde, ein Verfahren bereitzustellen, mit dem Reifendruckkontrollsysteme verbessert werden.

Gelöst wird die Aufgabe durch ein Verfahren mit den folgenden Schritten:
a) Bereitstellen von Fahrzeugreifen mit jeweils einem Reifenmodul,
   wobei das Reifenmodul zumindestens einen Reifendrucksensor umfasst,
b) Regelmäßige Messung des Reifendruckes in vorgegebenen Zeitintervallen,
c) Übermittlung der einzelnen Druckwerte an eine Speichereinheit auf dem Reifenmodul,
d) Zuordnen des jeweiligen Druckwertes zu einem definierten Druckintervall,
e) Speicherung der jeweiligen gemessenen Druckwerte mit einem Zählersystem auf der Speichereinheit,
   wobei mit dem Zählersystem die Häufigkeit von Druckwerten in dem jeweils definierten Druckintervall erfasst wird,
f) Initiierung einer Beurteilung zu einer bestimmten Reifeneigenschaft oder zu einer bestimmten Fahrzeugeigenschaft.

Ein Vorteil des Verfahrens besteht darin, dass mit dem Einsatz des neuen Verfahrens herkömmliche Reifendruckkontrollsysteme wesentlich verbessert werden.

Mit dem neuen Verfahren lässt sich insbesondere auf einfache Weise eine Druckhistorie von einzelnen Fahrzeugreifen aufzeichnen und auswerten.

Auf diese Weise kann einfach ermittelt werden, ob der Fahrzeugreifen besonders häufig mit einem zu geringen Reifendruck gefahren wurde.

Wenn der Fahrzeugreifen über lange Zeiten mit einem zu geringem Reifendruck betrieben wird, lässt sich bei der Reifenbeurteilung die Aussage treffen, dass der Fahrzeugreifen eine verkürzte Reifenhaltbarkeit aufweisen wird. Außerdem könnte das bedeuten, dass der Fahrzeugreifen nicht mehr für eine Runderneuerung geeignet ist.

In einer vorteilhaften Weiterbildung der Erfindung ist vorgesehen, dass das Reifenmodul einen Temperatursensor umfasst, wobei eine Regelmäßige Messung der Temperaturwerte in vorgegebenen Zeitintervallen erfolgt, wobei ein Zuordnen des jeweiligen Temperaturwertes zu einem definierten Temperaturinterval erfolgt, wobei eine Speicherung der jeweiligen gemessenen Temperaturwerte mit einem Zählersystem auf der Speichereinheit erfolgt, wobei mit dem Zählersystem die Häufigkeit von Temperaturwerte in dem jeweils definierten Temperaturintervall erfasst wird, wobei ein Auswerten einer Häufigkeitsverteilung der gemessenen Temperaturwerte mit einem Auswertealgorithmus erfolgt.

Mit der Aufzeichnung der Temperaturhistorie des Fahrzeugreifens lässt sich ebenfalls eine Aussage über die Reifenhaltbarkeit des Fahrzeugreifens treffen.

Bei der Beurteilung der Fahrzeugeigenschaft könnte der Fall vorliegen, dass eine Fahrzeugbremse defekt ist und entsprechend hohe Reifentemperaturen verursacht hat.

In einer weiteren vorteilhaften Weiterbildung der Erfindung ist vorgesehen, dass die gemessenen Druckbereiche einen Gesamtbereich zwischen ca. 50 % und ca. 130 % eines Nenndruckes vom Fahrzeugreifen umfassen, wobei die definierten Druckintervalle in einem Bereich zwischen ca. 3 % und ca. 6 % des Nenndruckes liegen.

Dadurch lässt sich auf einfach Weise eine Häufigkeitsverteilung für die gemessenen Druckwerte ermitteln.

Außerdem wird dadurch die erforderliche Größe für die Speichereinheit auf ein Optimum reduziert.

In einer weiteren vorteilhaften Weiterbildung der Erfindung ist vorgesehen, dass die Temperaturbereiche einen Gesamtbereich zwischen ca. 250 Kelvin und ca. 400 Kelvin abdecken, wobei die definierten Temperaturintervalle in einem Bereich zwischen ca. 4 und 10 Kelvin, vorzugsweise ca. 5 Kelvin, liegen.

Dadurch kann eine einfache Häufigkeitsverteilung für die gemessenen Temperaturwerte erstellt werden.

In einer weiteren vorteilhaften Weiterbildung der Erfindung ist vorgesehen, dass für Messwerte oberhalb oder unterhalb des Gesamtbereiches jeweils ein weiteres Intervall bereitgestellt wird.

Im Normalfall werden die Messwerte oberhalb und unterhalb des Gesamtbereiches eine geringe Anzahl ausmachen.

In einer weiteren vorteilhaften Weiterbildung der Erfindung ist vorgesehen, dass das Zählersystem die zeitliche Länge zwischen den Messintervallen für den Druck- und/oder Temperaturwert berücksichtigt.

Dadurch wird die Häufigkeitsverteilung nicht verfälscht, wenn sich die Zeitintervalle für die Messintervalle zwischendurch ändern.

In einer weiteren vorteilhaften Weiterbildung der Erfindung ist vorgesehen, dass die Speichergröße des Zählersystems für das zu erwartende Fahrzeugreifenleben ausgelegt ist. Insbesondere bei Nutzfahrzeugreifen sollte die Speichergröße ausreichend groß sein, da diese eine Laufleistung von bis zu 300.000 km haben können.

In einer weiteren vorteilhaften Weiterbildung der Erfindung ist vorgesehen, dass die Zählersysteme über ein externes Auslesegerät ausgelesen und ausgewertet werden.

Bei dem externen Auslesegerät kann es sich beispielsweise um ein Smartphone handeln, wobei das Zählersystem über eine Bluetooth-Verbindung ausgelesen wird.

In einer weiteren vorteilhaften Weiterbildung der Erfindung ist vorgesehen, dass bei der Reifenbeurteilung eine Aussage zu der noch verbleibenden zuverlässigen Haltbarkeit des Fahrzeugreifen getroffen wird.

Dadurch kann beispielsweise ein Flottenbetreiben schnell ermitteln, wann bestimmte Fahrzeugreifen in Zukunft auszuwechseln sind.

In einer weiteren vorteilhaften Weiterbildung der Erfindung ist vorgesehen, dass bei der Reifenbeurteilung eine Aussage getroffen wird, ob der Fahrzeugreifen für eine Runderneuerung des Laufstreifens geeignet ist.

Auf diese Weise können bestimmte Fahrzeugreifen direkt ohne weitere Untersuchungen von einer Runderneuerung ausgeschlossen werden.

In einer weiteren vorteilhaften Weiterbildung der Erfindung ist vorgesehen, dass das Reifenmodul auf einer Reifeninnenseite eines Fahrzeugreifens angeordnet ist, wobei der Temperatursensor die Temperaturwerte des Laufstreifens und/ oder der Seitenwände erfasst.

Die Temperatur im Laufstreifen oder auf der Seitenwand ist ein direktes Maß für die Temperatur an der Gürtelkante des Reifens.

Die Überwachung der Temperaturwerte des Laufstreifens und der Seitenwände des Fahrzeugreifens sind besonders wichtig, um die Reifenhaltbarkeit abzuschätzen.

Eine kontinuierlich gemessene zu hohe Temperatur des Laufstreifens und somit der Gürtelkante hat einen negativen Einfluss auf die Reifenhaltbarkeit.

Anhand eines Ausführungsbeispiels soll die Erfindung näher erläutert werden. Es zeigt:
Fig. 1: Einen Fahrzeugreifen mit einem Reifenmodul in einer Seitenansicht.
Fig. 2: Die Sensoren, die Speichereinheit und das externe Auslesegerät.
Fig. 3: Ein Beispiel für die gemessene Temperaturhistorie.

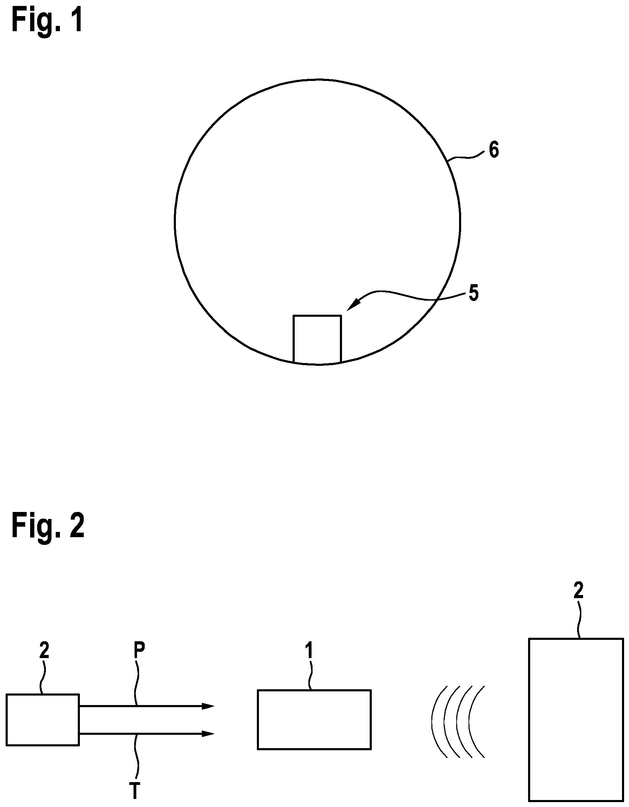

Die Fig. 1 zeigt ein Ausführungsbeispiel.

Der Fahrzeug 6 ist in einer Seitenansicht dargestellt. Auf der Reifeninnenseite 6 ist ein Reifenmodul 5 angeordnet, in dem u.a. ein Drucksensor und ein Temperatursensor angeordnet sind.

Der Reifendruck und die Temperatur werden regelmäßig, beispielsweise alle zwei Minuten, von den Sensoren gemessen.

Die Figur 2 zeigt schematisch, wie der Druck und Temperatursensor 2 kontinuierlich den Reifendruck P und die Temperatur T messen.

Beide Messgrößen werden mit einem Zählersystem auf dem Reifenmodul 5 erfasst.

Das Zählersystem umfasst eine Speichereinheit 1 mit dem die Druckhistorie und die Temperaturhistorie erfasst und ausgewertet werden.

Die Speichereinheit 1 kann mit einem externen Lesegerät 2 ausgelesen werden.

Dabei kann es sich beispielsweise um ein Smartphone handeln.

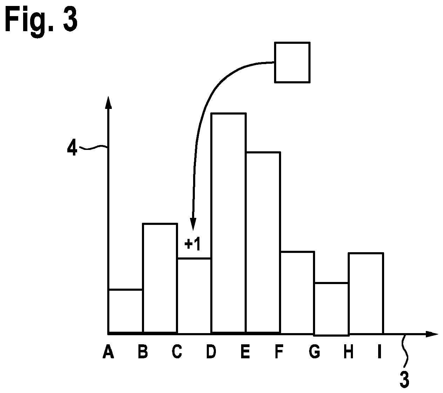

Die Figur 3 zeigt ein Beispiel für eine Häufigkeitsverteilung der gemessenen Temperaturwerte. Auf der X-Achse 3 ist die Temperatur in Kelvin aufgetragen. Auf der Y-Achse 4 ist die jeweilige Anzahl aufgetragen. Die Temperaturbereiche weisen z.B. eine Intervallgröße zwischen 4 und 10 Kelvin auf. Der Temperaturbereich zwischen dem Wert A und dem Wert B könnte z.B. die Temperaturwerte von 250 bis 255 Kelvin umfassen. Immer, wenn ein Temperaturwert in diesem Bereich gemessen wird, wird der entsprechende Zähler um den Wert 1 erhöht.

Die jeweiligen Speicherintervalle können hierbei auch an den Reifen angepasst werden, um z.B. zu berücksichtigen, ob es sich um einen PKW-Reifen oder um einen Nutzfahrzeugreifen handelt.

Mit dem auf diese Weise bereit gestellten Histogramm lässt sich schnell ermitteln, ob der Fahrzeugreifen sehr häufig mit einer hohen Temperatur betrieben worden ist.

Wenn sich diese Aussage mit den Histogramm treffen lässt, kann ebenfalls die Aussage getroffen werden, dass die Reifenhaltbarkeit des Fahrzeugreifens wesentlich kürzer ausfallen wird. Es könnte beispielsweise die Aussage erfolgen, dass die Reifenhaltbarkeit nur noch maximal ein halbes Jahr betragen, statt der im Normalfall zu erwartenden zwei Jahre.

Die Auswertung der Druckhistorie des Fahrzeugreifens würde analog zu dem Histogramm in der Figur 3 erfolgen.

Die Druckbereiche würden z.B. Intervallgrößen von 3 bis 6 % des Nenndruckes umfassen. Für Messwerte oberhalb des Gesamtbereichs sowie Messwerte unterhalb des Gesamtbereichs werden jeweils ein weiteres Intervall zur Verfügung gestellt. Idealerweise sind die Intervalle klein und der Gesamtbereich groß. Die Intervallgröße wird abhängig vom Speicherbereich, der insgesamt zur Verfügung steht, gewählt. Für jede regelmäßige Messung wird der Zähler, in dessen Temperatur- oder Druckbereich die Messung liegt, um einen definierten Wert hochgezählt. Sollten die Messintervalle immer den gleichen Zeitabstand haben, kann der definierte Wert 1 sein. Sollten verschiedene Messintervalle vorhanden sein, ist der definierte Wert von der Länge des jeweiligen Messintervalls abhängig, so dass der Wert sich linear zur Länge des Messintervalls verhält. Falls beispielsweise im Sensor zwei Messintervalle möglich sind, deren Längen 16 bzw. 128 Sekunden betragen, könnte der jeweilige Zählerwert hier pro Messung um 1 bzw. 8 erhöht werden. Die Zähler haben eine ausreichende Speichergröße für das zu erwartende Reifenleben.

### Bezugszeichenliste

- 1: Speichereinheit
- 2: Druck- und Temperatursensor am Reifenmodul
- 3: x-Achse: Temperatur in Kelvin
- 4: y-Achse: Zähler
- 5: Reifenmodul
- 6: Fahrzeugreifen

- A bis B: unterhalb des Temperaturbereiches von ca. 250 Kelvin
- H bis I: oberhalb des Temperaturbereiches von ca. 400 Kelvin

- p: Reifendruck
- T: Temperatur

## Patentansprüche

1. Verfahren zur Speicherung von Reifendruckwerten von Fahrzeugreifen (6), mit mindestens den folgenden Schritten,
a) Bereitstellen von Fahrzeugreifen (6) mit jeweils einem Reifenmodul (5), wobei das Reifenmodul (5) zumindestens einen Reifendrucksensor umfasst,
b) Regelmäßige Messung des Reifendruckes in vorgegebenen Zeitintervallen,
**dadurch gekennzeichnet, dass**
c) Übermittlung der einzelnen Druckwerte an eine Speichereinheit (1) auf dem Reifenmodul (5),
d) Zuordnen des jeweiligen Druckwertes zu einem definierten Druckinterval,
e) Speicherung der jeweiligen gemessenen Druckwerte mit einem Zählersystem auf der Speichereinheit (1),
wobei mit dem Zählersystem die Häufigkeit von Druckwerten in dem jeweils definierten Druckintervall erfasst wird,
f) Initiierung einer Beurteilung zu einer bestimmten Reifeneigenschaft oder zu einer bestimmten Fahrzeugeigenschaft.

2. Verfahren nach Anspruch 1,
**dadurch gekennzeichnet, dass**
das Reifenmodul (5) einen Temperatursensor umfasst,
wobei eine Regelmäßige Messung der Temperaturwerte in vorgegebenen Zeitintervallen erfolgt,
wobei ein Zuordnen des jeweiligen Temperaturwertes zu einem definierten Temperaturinterval erfolgt,
wobei eine Speicherung der jeweiligen gemessenen Temperaturwerte mit einem Zählersystem auf der Speichereinheit erfolgt,
wobei mit dem Zählersystem die Häufigkeit von Temperaturwerte in dem jeweils definierten Temperaturintervall erfasst wird,
wobei ein Auswerten einer Häufigkeitsverteilung der gemessenen Temperaturwerte mit einem Auswertealgorithmus erfolgt.

3. Verfahren nach einem der vorhergehenden Ansprüche,
**dadurch gekennzeichnet, dass**
die gemessenen Druckbereiche einen Gesamtbereich zwischen ca. 40 % und ca. 150 % eines Nenndruckes vom Fahrzeugreifen (6) umfassen,
wobei die definierten Druckintervalle in einem Bereich zwischen 3 % und 6 % des Nenndruckes liegen.

4. Verfahren nach einem der vorhergehenden Ansprüche,
**dadurch gekennzeichnet, dass**
die Temperaturbereiche einen Gesamtbereich zwischen ca. 200 Kelvin und
ca. 450 Kelvin abdecken,
wobei die definierten Temperaturintervalle in einem Bereich zwischen 4 und 10 Kelvin, vorzugsweise ca. 5 Kelvin, liegen.

5. Verfahren nach einem der vorhergehenden Ansprüche,
**dadurch gekennzeichnet, dass**
für Messwerte oberhalb oder unterhalb des Gesamtbereiches jeweils ein weiteres Intervall bereitgestellt wird.

6. Verfahren nach einem der vorhergehenden Ansprüche,
**dadurch gekennzeichnet, dass**
das Zählersystem die zeitliche Länge zwischen den Messintervallen für den Druck- und/oder Temperaturwert berücksichtigt.

7. Verfahren nach einem der vorhergehenden Ansprüche,
**dadurch gekennzeichnet, dass**
die Speichergröße des Zählersystems für das zu erwartende Fahrzeugreifenleben ausgelegt ist.

8. Verfahren nach einem der vorhergehenden Ansprüche,
**dadurch gekennzeichnet, dass**
die Zählersysteme über eine externes Auslesegerät (2) ausgelesen und ausgewertet werden.

9. Verfahren nach einem der vorhergehenden Ansprüche,
**dadurch gekennzeichnet, dass**
bei der Reifenbeurteilung eine Aussage zu der noch verbleibenden zuverlässigen Haltbarkeit des Fahrzeugreifen (6) getroffen wird.

10. Verfahren nach einem der vorhergehenden Ansprüche,
**dadurch gekennzeichnet, dass**
bei der Reifenbeurteilung eine Aussage getroffen wird, ob der Fahrzeugreifen (6) für eine Runderneuerung des Laufstreifens geeignet ist.

11. Verfahren nach einem der vorhergehenden Ansprüche,
**dadurch gekennzeichnet, dass**
das Reifenmodul (5) auf einer Reifeninnenseite eines Fahrzeugreifens (6) angeordnet ist,
wobei der Temperatursensor die Temperaturwerte des Laufstreifens und/ oder der Seitenwände erfasst.

## Claims

1. Method for storing tyre pressure values of vehicle tyres (6), having at least the following steps:
a) providing vehicle tyres (6), each having a tyre module (5), the tyre module (5) comprising at least one tyre pressure sensor,
b) regularly measuring the tyre pressure at predefined time intervals, **characterized by**
c) transmitting the individual pressure values to a memory unit (1) on the tyre module (5),
d) assigning the respective pressure value to a defined pressure interval,
e) storing the respective measured pressure values with a counter system on the memory unit (1),
the counter system being used to record the frequency of pressure values in the respectively defined pressure interval,
f) initiating an assessment in relation to a specific tyre property or in relation to a specific vehicle property.

2. Method according to Claim 1,
**characterized in that**
the tyre module (5) comprises a temperature sensor,
the temperature values being regularly measured at predefined time intervals,
the respective temperature value being assigned to a defined temperature interval, the respective measured temperature values being stored with a counter system on the memory unit,
the counter system being used to record the frequency of temperature values in the respectively defined temperature interval,
a frequency distribution of the measured temperature values being evaluated with an evaluation algorithm.

3. Method according to either of the preceding claims,
**characterized in that**
the measured pressure ranges comprise an overall range between about 40% and about 150% of a nominal pressure of the vehicle tyre (6),
the defined pressure intervals lying in a range between 3% and 6% of the nominal pressure.

4. Method according to one of the preceding claims,
**characterized in that**
the temperature ranges cover an overall range between about 200 kelvins and about 450 kelvins,
the defined temperature intervals lying in a range between 4 and 10 kelvins, preferably about 5 kelvins.

5. Method according to one of the preceding claims,
**characterized in that**
a further interval is respectively provided for measured values above or below the overall range.

6. Method according to one of the preceding claims,
**characterized in that**
the counter system takes into account the length of time between the measuring intervals for the pressure and/or temperature value.

7. Method according to one of the preceding claims,
**characterized in that**
the memory size of the counter system is designed for the expected lifetime of the vehicle tyre.

8. Method according to one of the preceding claims,
**characterized in that**
the counter systems are read and evaluated by an external reader (2).

9. Method according to one of the preceding claims,
**characterized in that**
in the tyre assessment, a statement is made concerning the still remaining reliable durability of the vehicle tyre (6).

10. Method according to one of the preceding claims,
**characterized in that**
in the tyre assessment, a statement is made as to whether the vehicle tyre (6) is suitable for retreading.

11. Method according to one of the preceding claims,
**characterized in that**
the tyre module (5) is arranged on a tyre inner side of a vehicle tyre (6),
the temperature sensor recording the temperature values of the tread and/or of the sidewalls.

## Revendications

1. Procédé de mémorisation de valeurs de pression de pneu de pneus de véhicules (6), comprenant au moins les étapes suivantes,
a) fourniture des pneus de véhicule (6) comprenant respectivement un module de pneu (5), le module de pneu (5) comprenant au moins un capteur de pression de pneu,
b) mesure régulière de la pression de pneu à des intervalles de temps prédéfinis, **caractérisé par**
c) communication des valeurs de pression individuelles à une unité de mémoire (1) sur le module de pneu (5),
d) affectation de la valeur de pression respective à un intervalle de pression défini,
e) mémorisation des valeurs de pression respectivement mesurées avec un système de compteur sur l'unité de mémoire (1),
la fréquence des valeurs de pression dans l'intervalle de pression respectivement défini étant acquise avec le système de compteur,
f) initiation d'une évaluation à propos d'une caractéristique de pneu déterminée ou à propos d'une caractéristique de véhicule déterminée.

2. Procédé selon la revendication 1, **caractérisé en ce que**
le module de pneu (5) comprend un capteur de température,
une mesure régulière des valeurs de température étant effectuée à des intervalles de temps prédéfinis,
une affectation de la valeur de température respective à un intervalle de température défini étant effectuée,
une mémorisation des valeurs de température respectivement mesurées avec un système de compteur sur l'unité de mémoire étant effectuée,
la fréquence des valeurs de température dans l'intervalle de température respectivement défini étant acquise avec le système de compteur,
une évaluation d'une distribution de fréquence des valeurs de température mesurées étant effectuée avec un algorithme d'évaluation.

3. Procédé selon l'une des revendications précédentes,
**caractérisé en ce que**
les plages de pression mesurées comprennent une plage totale comprise entre environ 40 % et environ 150 % d'une pression nominale de pneus de véhicule (6),
les intervalles de pression définis se situant dans une plage comprise entre 3 % et 6 % de la pression nominale.

4. Procédé selon l'une des revendications précédentes,
**caractérisé en ce que**
les plages de température couvrent une plage totale comprise entre environ 200 kelvins et environ 450 kelvins,
les intervalles de température définis se situant dans une plage comprise entre 4 et 10 kelvins, de préférence environ 5 kelvins.

5. Procédé selon l'une des revendications précédentes,
**caractérisé en ce que**
un intervalle supplémentaire est mis à disposition pour les valeurs de mesure supérieures ou inférieures à la plage totale.

6. Procédé selon l'une des revendications précédentes,
**caractérisé en ce que**
le système de compteur tient compte de la durée entre les intervalles de mesure pour la valeur de pression et/ou de température.

7. Procédé selon l'une des revendications précédentes,
**caractérisé en ce que**
la taille de la mémoire du système de compteur est conçue pour la durée de vie attendue des pneus de véhicule.

8. Procédé selon l'une des revendications précédentes,
**caractérisé en ce que**
les systèmes de compteur sont lus et évalués par le biais d'un appareil de lecture externe (2).

9. Procédé selon l'une des revendications précédentes,
**caractérisé en ce que**
lors de l'évaluation du pneu, une affirmation est émise à propos de la durabilité fiable restante du pneu de véhicule (6).

10. Procédé selon l'une des revendications précédentes,
**caractérisé en ce que**
lors de l'évaluation du pneu, une affirmation est émise indiquant si le pneu de véhicule (6) convient pour un rechapage de la bande de roulement.

11. Procédé selon l'une des revendications précédentes,
**caractérisé en ce que**
le module de pneu (5) est disposé sur un côté intérieur de pneu d'un pneu de véhicule (6),
le capteur de température détectant les valeurs de température de la bande de roulement et/ou des parois latérales.
